# EUROPEAN PATENT SPECIFICATION

(11) **EP 0 471 865 B1**
(45) Date of publication and mention of the grant of the patent: **15.05.1996**
(21) Application number: 90115929.3
(22) Date of filing: 20.08.1990
(51) Int. Cl.: G01F 3/10, G01F 15/14, G01F 15/00, G01F 15/06

(54) **Positive displacement flowmeter**
Volumetrischer Verdrängungsdurchflussmesser
Débimètre à déplacement positif

(43) Date of publication of application: 26.02.1992
(60) Divisional application: 94117883.2
(73) Proprietor: Oval Engineering Co., Ltd., Shinjuku-ku, Tokyo (JP)
(72) Inventor: Asanuma, Yoshio, 3-chome Shinju-ku, Tokyo (JP); Yokota, Fumio, 3-chome Shinju-ku, Tokyo (JP); Tsuchiya, Hironari, 3-chome Shinju-ku, Tokyo (JP); Miyagawa, Yasuhiro, 3-chome Shinju-ku, Tokyo (JP); Fujii, Hiroshi, 3-chome Shinju-ku, Tokyo (JP); Hayakawa, Osamu, 3-chome Shinju-ku, Tokyo (JP); Hotta, Koji, 3-chome Shinju-ku, Tokyo (JP)
(74) Representative: Grünecker, Kinkeldey, Stockmair & Schwanhäusser Anwaltssozietät

(56) References cited:
- DE-A- 1 798 161

## Description

### BACKGROUND OF THE INVENTION

Conventional type flowmeters, each of which has an indicator unitarily attached to its body and is connected to a pipe by means of flanges or like joining means, are generally used for measuring and indicating the fluid's flow by processing a flow-rate signal from a measuring portion. There have been many applications of positive displacement flowmeters of this type. The positive displacement flowmeter, operating on the principle of a constant volume of fluid discharged by a rotor rotating in a measuring chamber of the flowmeter's body, is usually mounted with its rotor shaft horizontally positioned so as to correctly measure the fluid's flow-rate proportional to the rotation of the rotor without causing any undesirable rolling friction. Furthermore, when the flowmeter is mounted on the piping, its indicating portion is attached to the flowmeter's body horizontally along the axis of the flowmeter so as to vertically dispose the indicating panel for easily reading it.

The positive displacement flowmeter's body is attached at its flanges to a pipeline through which a fluid to be measured flows. A counting portion having the function of processing the flow-rate's signal and to indicate the value obtained is accommodated in an outer housing which is removably attached to the flowmeter's body through an outer connecting housing with setscrews in deeply counter-bored holes in the outer housing. However, in the case where the flowmeter is mounted on outdoor piping, rain water may accumulate in the deeply counter-bored holes and penetrate through the threaded portions of the set-screws into a small clearance between the inserted pipe of the outer indicator housing and the inserted hole of the outer housing, which during a long period of time may exert an adverse effect on the inner devices of the counting portion and also make it impossible to remove the inserted part of the outer indicator housing from the connecting housing due to the rusting of its inserted part.

### SUMMARY OF THE INVENTION

It is an object of the invention to provide a positive displacement flowmeter which is so constructed as to discharge rain water collected in counterbored bolt holes of a flow-rate indicator, attached to the flowmeter body, by using bolts in said holes. This object is achieved by the claimed apparatus.

### BRIEF DESCRIPTION OF THE DRAWINGS

Figure 1 is a perspective view showing a positive displacement flowmeter according to the present invention;
Figure 2 shows a detailed portion of the embodiment of Fig.1;
Figure 3 is a sectional view taken along line III-III of Fig.2;
Figure 4 is a perspective view showing the mechanism for the mounting devices;
Figure 5 is a sectional view taken along line V-V of Fig.4;
Figures 6 and 7 are sections taken on lines VI-VI and VII-VII, respectively, in Fig.5;

### DESCRIPTION OF PREFERRED EMBODIMENTS

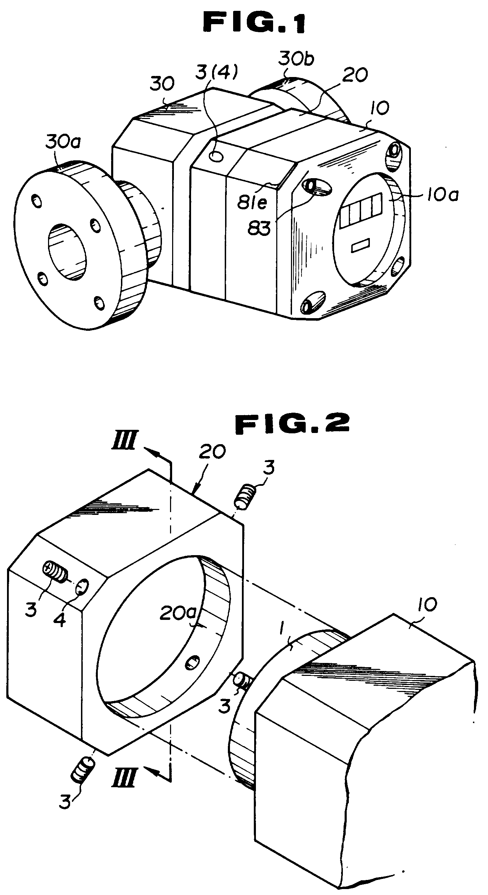

Fig.1 shows an example of a flowmeter which is composed of a body 30 having flanges 30a and 30b for connecting to a pipeline (not shown), a counting portion 10 incorporating therein a counting unit capable of processing a flow-rate signal to be indicated on a flow-rate indicating unit 10a, and a connector housing 20 for removably connecting the device housing 10 to the body 30 of the flow meter. As shown in Fig.2, the device housing 10 is secured to the connector housing by means of set screws 3 screwed into counterbored threaded holes 4 in the connector housing.

Fig.2 is a detailed view showing an example of attaching the device housing 10 to the connector housing. As shown in Fig.2, the device housing has an inserting cylindrical portion 1 extending concentrically and outwardly, which is inserted into a receiving hole 20a concentrically drilled in the connector housing 20, and which is clamped therein by set screws 3 screwed through the counterbored holes 4, two (upper and lower) pairs, arranged symmetrically to each other along line III-III of Fig.2 at both sides of the connector housing 20. Since the connector housing 20 is made in the same form as the device housing 10, they can be unitarily connected as shown in Fig.1. The inserting cylindrical portion 1 of the device housing and the receiving hole 20a of the connector housing do not always need to be concentric with their housings respectively, i.e. if both housings may be connected with each other to form a unit of the same form.

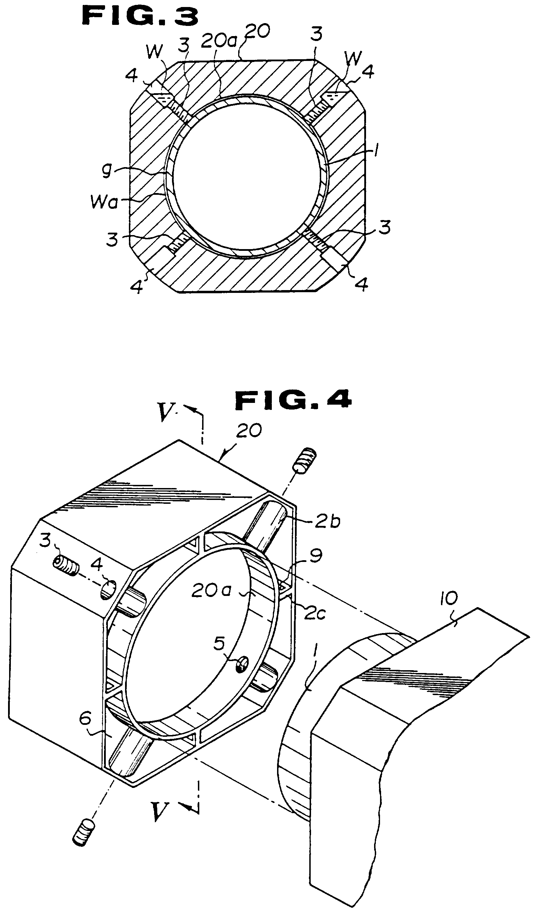

Fig.3 shows a cross-section of the unitarily connected portion of both housings 20 and 10, which is taken along line III-III of Fig.2. When the flowmeter is mounted on the outdoor pipeline, rain water "W" may collect in the counterbored holes 4, as illustrated, gradually penetrating through the threaded portions of the setscrews 3 into a small clearance "g" between the receiving hole of the connector housing 20 and the insert portion 1 of the device housing 10 as shown by the letters Wa resulting in that the inner components of the device housing are subjected to deterioration from humidity and after a long period it becomes impossible to remove the insertion part of the device housing from the connector housing due to the rusting of its inserted portion.

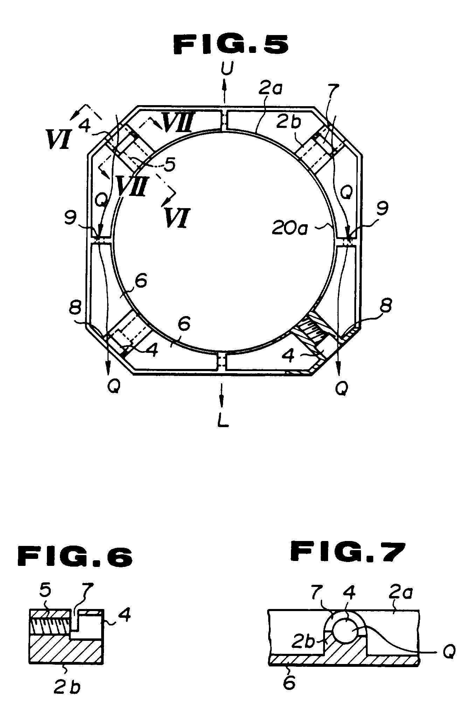

Fig.4 is a perspective view showing a method for connecting the device housing 10 to the connector housing 20. Fig.5 is a view taken in the direction of the arrows along line V-V of Fig.4. In these drawings, like parts, as those of Fig.2, are indicated by like reference characters. The connector housing 20 has a receiving ring (hole) 20a which is secured concentrically in the connector housing 20 by means of inner walls 6. In other words, the connector housing 20 is separated by the inner walls 6 from the receiving hole 20a and its counterbored holes 4 communicate with the receiving ring 20a through corresponding columned ribs 2b. Each counterbored hole 4, drilled through the columned rib 2b to an opening in the receiving ring 2a, has a thread 5 cut therein. Through-holes 9 made in the reinforcing ribs 2c between the housing 20 and the receiving ring 2a are provided for allowing the rain water to flow out.

Fig.6 is a sectional view taken in the direction of the arrow along line VI-VI of Fig.5 showing the columned rib 2b. Fig.7 is a sectional view taken in the direction of the arrows along line VII-VII of Fig.5. In these drawings, a drain ditch 7 is drilled toward the inner wall 6 from the circumference of the columned rib 2b at the bottom of the counterbored hole 4. Since said drain ditch 7 is intended to discharge the rain water collected in the corresponding counterbored hole 4 through the columned rib, it is preferable to make the lower portion of the ditch deeper so as to completely drain out the rain water therethrough. A drain hole 8 is drilled through in the vicinity of the connector housing 20 above the counterbored hole 4 in the lower columned rib 2b. The above-mentioned drain system realizes the draining of the rain water collected in each of the upper counterbored holes 4 in such a way that, as shown by arrows Q in Fig.5, the rain water flows along the wall's surface 6 between the receiving ring 2a and the connector housing 20, passes through the passage hole 9 and the drain hole 8 and reaches the lower counterbored hole 4 wherefrom it is then discharged out of the connector housing. The clearance between the connector housing and the device housing is sealed with a flexible plate such as a rubber plate to prevent the penetration of the rain water into the device housing. Although the above-mentioned rain water draining system is applied to two pairs of the upper and lower counterbored holes at the opposite sides along line V-V in the Fig.4, the method described can be applied not only to flow meters, but also to any object which has counterbored holes at its upper portion, shroudings at their upper and lower portions and inner chambers allowing liquid to flow therethrough. Since according to the above-mentioned mounting method rain water can run along the vertically provided draining channel in the housing from the upper counterbored hole to the lower counterbored hole wherefrom it is discharged, there will be no effect by the rain water on the insulation of the electric circuit components in the device housing. Furthermore, the inserting and receiving portions can be prevented from rusting and the outside surface of the housing can be kept unstained by the effect of rain water making the maintenance of the flow meter easier.

## Claims

1. A housing arrangement for use with a positive displacement flowmeter, comprising a mounting portion, having a tubular housing (20) with end faces for mounting said mounting portion to a housing of a flowmeter, and an inner cylinder (20a) concentrically and unitarily formed therein, and a tubular device portion (10), for containing a counting unit of the flowmeter, having a housing of the same cross-section as that of the mounting portion housing (20) and an inner concentric inserting cylinder (1), said inserting cylinder (1) of the device portion (10) being insertable into said inner cylinder (20a) of the mounting portion (20) and being secured therewith by use of a set of screws (3) through counterbored holes (4) formed in rib members (2b), which connect said outer housing (20) with the inner cylinder (20a), said rib members (2b) being provided at upper and lower parts of the mounting portion (20), each upper rib (2b) having a drainage hole (7) drilled in the lower wall of the counterbored portion of its counterbored hole (4) and each lower rib (2b) having a drainage hole (8) in the upper wall of the counterbored portion of its counterbored hole (4), to allow rain water entering the upper counterbored holes (4) to drain along the inner walls of the mounting portion (20) and then flow out from the lower counterbored holes(4).

## Patentansprüche

1. Gehäuseanordnung zur Verwendung mit einem volumetrischen Verdrängungsdurchflußmesser mit
einem Befestigungsteil, das ein rohrförmiges Gehäuse (20) aufweist, das über seine Stirnseiten mit dem Gehäuse des Durchflußmessers verbunden ist sowie einem einstückigen, konzentrisch darin ausgebildeten inneren Zylinder (20a) und einem rohrförmigen Geräteteil (10) zur Aufnahme einer Zähleinheit des Durchflußmessers, das den selben Querschnitt wie das Befestigungsteil (20) und einen inneren, konzentrischen Einschiebzylinder (1) hat, wobei der Einschiebzylinder (1) des Geräteteils (10) in den inneren Zylinder (20a) des Befestigungsteils (20) einschiebbar und mittels Schrauben (3) darin gesichert ist, die durch in Rippenteilen (2b), die das äußere Gehäuse (20) mit dem inneren Zylinder (20a) verbinden, ausgebildete Schulterbohrungen (4) hindurchgehen, wobei die Rippenteile (2b) in oberen und unteren Abschnitten des Befestigungsteiles (20) ausgebildet sind, jede obere Rippe (2b) ein in die untere Wand des eingesenkten Bereiches ihrer Schulterbohrung (4) gebohrtes Entwässerungsloch (7) aufweist und jede untere Rippe (2b) ein Entwässerungsloch (8) in der oberen Wand des eingesenkten Bereiches ihrer Schulterbohrung aufweist, so daß in die oberen Schulterbohrungen (4) eingedrungenes Regenwasser entlang der inneren Wände des Befestigungsteiles (20) abfließen und aus den unteren Schulterbohrungen (4) austreten kann.

## Revendications

1. Agencement d'enceintes pour utilisation avec un débitmètre à déplacement positif, qui comporte une portion formant monture, possédant une enceinte tubulaire (20) dont les surfaces d'extrémités sont destinées à monter ladite portion formant monture sur une enceinte d'un débitmètre, et un cylindre intérieur (20a) qui y est ménagé de manière concentrique et solidaire, et une portion (10) formant appareil tubulaire destinée à contenir une unité formant compteur du débitmètre, possédant une enceinte de la même section droite que celle de l'enceinte (20) de la portion formant monture et un cylindre intérieur concentrique (1) pour insertion, ledit cylindre (1) pour insertion de la portion formant appareil (10) étant susceptible d'être inséré dans ledit cylindre intérieur (20a) de la portion (20) formant monture et étant assujetti à ce dernier cylindre au moyen d'un jeu de vis (3) traversant des trous épaulés (4) alésés dans des organes formant entretoises (2b), qui raccordent ladite enceinte extérieure (20) au cylindre intérieur (20a), lesdits organes (2b) formant entretoises étant disposés au droit des parties supérieures et inférieures de la portion (20) formant monture, chaque entretoise (2b) supérieure possédant un trou (7) de drainage foré dans la paroi inférieure de la portion épaulée de son trou épaulé (4) et chaque entretoise (2b) inférieure possédant un trou (8) de drainage situé dans la paroi supérieure de la section épaulée de son trou épaulé (4), de façon à permettre à de l'eau de pluie pénétrant dans les trous épaulés supérieurs d'être drainée le long des parois intérieures de la portion (20) formant monture et ensuite de s'écouler en sortant hors des trous épaulés inférieurs (4).
